# EUROPEAN PATENT APPLICATION

(11) **EP 3 608 269 A1**
(43) Date of publication of application: **12.02.2020**
(21) Application number: 18188501.3
(22) Date of filing: 10.08.2018
(51) Int. Cl.: B66B 1/34

(54) **ELEVATOR COMMUNICATIONS SYSTEM**

(71) Applicant: Otis Elevator Company, Farmington, Connecticut 06032 (US)
(72) Inventor: Pahlke, Derk Oscar, 13507 Berlin (DE)
(74) Representative: Schmitt-Nilson Schraud Waibel Wohlfrom Patentanwälte Partnerschaft mbB

(57) **Abstract**

An elevator system includes a hoistway; an elevator car configured to travel in the hoistway; a local gateway device configured to communicate with a remote system over a communications network; a communications apparatus installed at the elevator car, the communications apparatus including a codec configured to encode audio data from the elevator car prior to transmission to the local gateway device.

## Description

The embodiments herein relate generally to the field of elevator systems, and more particularly, to a communications system for use in an elevator system.

Elevator systems may include a communications system so that a passenger in an elevator car can communicate with others outside the elevator car. Elevator emergency call systems are mandatory by code in certain regions. Legacy elevator systems used a wired solution, in which a telephone line traveled with the elevator car. Such systems have high installation cost. Wireless communications systems exist, but use high bandwidth and high cost solutions, such as VOIP.

According to an embodiment, an elevator system includes a hoistway; an elevator car configured to travel in the hoistway; a local gateway device configured to communicate with a remote system over a communications network; a communications apparatus installed at the elevator car, the communications apparatus including a codec configured to encode audio data from the elevator car prior to transmission to the local gateway device. In addition to one or more of the features described herein, or as an alternative, further embodiments may include wherein the codec is configured to decode audio data received from the local gateway device.

Particular embodiments may include any of the following additional optional features alone or in combination:
In addition to one or more of the features described above, or as an alternative, further embodiments may include wherein the communications apparatus comprises and speaker and a microphone.

In addition to one or more of the features described above, or as an alternative, further embodiments may include wherein the communications apparatus comprises a plurality of microphones.

In addition to one or more of the features described above, or as an alternative, further embodiments may include wherein the communications apparatus performs echo cancelation on audio received from the plurality of microphones.

In addition to one or more of the features described above, or as an alternative, further embodiments may include wherein the communications apparatus comprises a communications module configured to send and receive encoded audio data to and from the local gateway device.

In addition to one or more of the features described above, or as an alternative, further embodiments may include wherein the communications module sends or receives the encoded audio data at a rate of about 0.5 kbps to about 10 kbps.

According to another embodiment, a communications apparatus for an elevator system includes a microphone; a speaker; a processor coupled to the microphone and speaker; a codec configured to (i) encode audio data received from the microphone for transmission to a local gateway device and (ii) decode encoded audio data received from the local gateway device for transmission to the speaker; a communications module configured to send encoded audio data to the local gateway device and receive encoded audio data from the local gateway device.

Particular embodiments may include any of the following additional optional features alone or in combination:
In addition to one or more of the features described above, or as an alternative, further embodiments of the communications apparatus may include wherein the communications module transmits and receives encoded audio data at a rate of about 0.5 kbps to about 10 kbps.

In addition to one or more of the features described above, or as an alternative, further embodiments of the communications apparatus may include wherein the microphone comprises a plurality of microphones.

In addition to one or more of the features described above, or as an alternative, further embodiments of the communications apparatus may include wherein the processor performs echo cancelation on audio received from the plurality of microphones.

In addition to one or more of the features described above, or as an alternative, further embodiments of the communications apparatus may include a battery to power the communications apparatus.

According to another embodiment, a communications system includes a hoistway; an elevator car configured to travel in the hoistway; a local gateway device configured to communicate with a remote system over a communications network; a communications apparatus installed at the elevator car, the communications apparatus including a codec configured to encode audio data from the elevator car prior to transmission to the local gateway device; a remote system; a communications network configured to communicate encoded audio data from the local gateway device to the remote system and to communicate encoded audio data from the remote system to the local gateway device.

Particular embodiments may include any of the following additional optional features alone or in combination:
In addition to one or more of the features described above, or as an alternative, further embodiments of the communications system may include wherein the remote system is an emergency call center.

According to another embodiment a method of communicating between an elevator car and a remote system includes receiving audio from a passenger at a communications apparatus in the elevator car; encoding the audio using a codec to produce encoded audio data; transmitting the encoded audio data to a local gateway device; transmitting the encoded audio data from the local gateway device to the remote system over a communications network; decoding the encoded audio data at the remote system using a codec; and producing the audio at the remote system.

Technical effects of embodiments of the present disclosure include the ability to send and receive voice communications from and elevator car using a low data rate.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The present disclosure is illustrated by way of example and not limited in the accompanying figures in which like reference numerals indicate similar elements.
FIG. 1 depicts an elevator system that may employ various embodiments of the present disclosure;
FIG. 2 depicts a communications system for the elevator system of FIG. 1, in accordance with an example embodiment of the disclosure;
FIG. 3 depicts a communications apparatus, in accordance with an example embodiment of the disclosure;
FIG. 4 depicts a process of transmitting audio in accordance with an example embodiment of the disclosure.

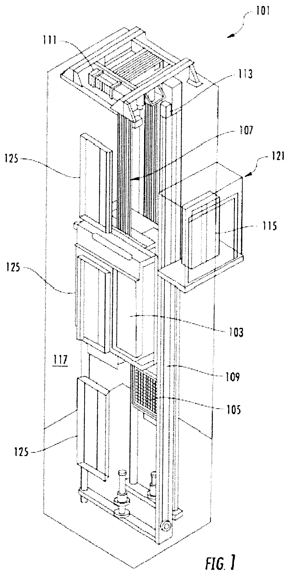

FIG. 1 is a perspective view of an elevator system 101 including an elevator car 103, a counterweight 105, a tension member 107, a guide rail 109, a machine 111, a position reference system 113, and a system controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator hoistway 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator hoistway 117, such as on a support or guide rail, and may be configured to provide position signals related to a position of the elevator car 103 within the elevator hoistway 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The system controller 115 is located, as shown, in a controller room 121 of the elevator hoistway 117 and is configured to control the operation of the elevator system 101, and particularly the elevator car 103. For example, the system controller 115 may provide drive signals to the machine 111 to control the acceleration, deceleration, leveling, stopping, etc. of the elevator car 103. The system controller 115 may also be configured to receive position signals from the position reference system 113 or any other desired position reference device. When moving up or down within the elevator hoistway 117 along guide rail 109, the elevator car 103 may stop at one or more landings 125 as controlled by the system controller 115. Although shown in a controller room 121, those of skill in the art will appreciate that the controller 115 can be located and/or configured in other locations or positions within the elevator system 101. In one embodiment, the system controller 115 may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator hoistway 117.

Although shown and described with a roping system including tension member 107, elevator systems that employ other methods and mechanisms of moving an elevator car within an elevator hoistway may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

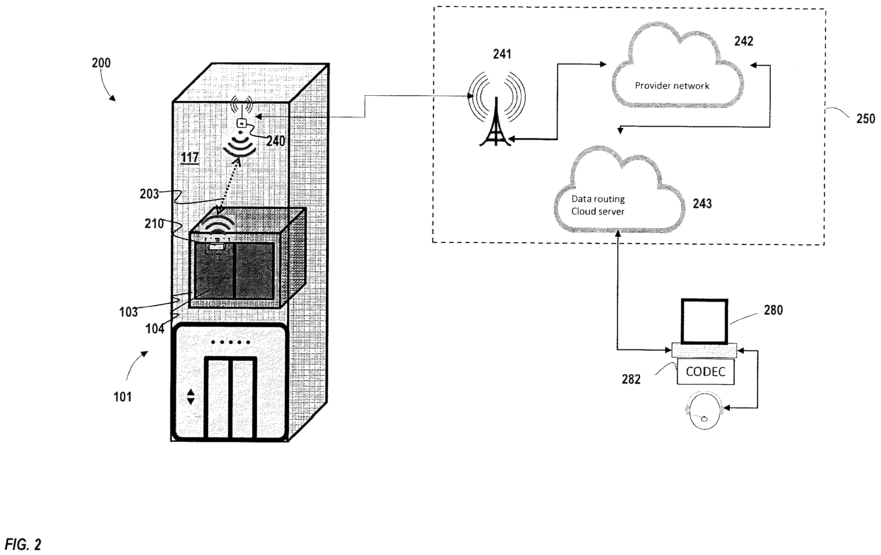

FIG. 2 is a view of a communications system 200 including a communications apparatus 210 installed at the elevator car 103, according to an example embodiment of the present disclosure. The communications apparatus 210 is configured to send and receive encoded audio data between the elevator car 103 and a remote system 280 over a communications network 250. The remote system 280 may include a computing device, such as, for example, a desktop computer, server, etc., at a call center that handles emergency calls from the elevator car 103. The remote system 280 may include a mobile computing device that is typically carried by a person, such as, for example a smartphone, PDA, smartwatch, tablet, laptop, etc. The remote system 280 may be implemented using a distributed computing network (e.g., cloud computing).

The communications apparatus 210 is configured to send/receive encoded audio data 203 to/from a local gateway device 240 via low bandwidth wireless protocols. Wireless protocols may include, but are not limited to, Bluetooth, Wi-Fi, HaLow (801.11ah), Wireless M-Bus, Zigbee, zWave. The local gateway device 240 may be mounted in the hoistway 117, for example, at the top of the hoistway 117. The local gateway device 240 is configured to transmit the encoded audio data 203 to and from the remote system 280 over a communications network 250. The communications network 250 may include a variety of individual wired or wireless networks. In the example in FIG. 2, the local gateway device 240 communicates encoded audio data to a cellular network 241 using known techniques (e.g., cellular, GSM, CDMA, LTE (NB-loT, CAT M1), LoRa, or SigFox). From the cellular network 241, encoded audio data is sent to provider network 242, and then to a data routing cloud server 243. The data routing cloud server 243 communicates with the remote system 280, which executes a codec 282, similar to a codec used in the communications apparatus 210, to decode the encoded audio data. It is understood that the transmission of encoded audio data is bi-directional between the communications apparatus 210 and the remote system 280.

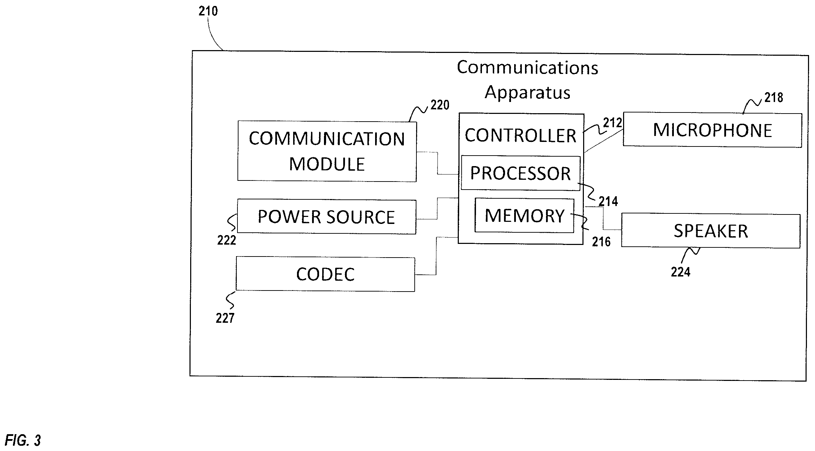

FIG. 3 illustrates a block diagram of the communications apparatus 210 of the communications system 200 of FIG. 2. It should be appreciated that, although particular systems are separately defined in the schematic block diagram of FIG. 3, each or any of the systems may be otherwise combined or separated via hardware and/or software. As shown in FIG. 3, the communications apparatus 210 may include a controller 212, a microphone 218 in communication with the controller 212, a speaker 224 in communication with the controller 212, a communications module 220 in communication with the controller 212, and a power source 222 electrically connected to the controller 212. The communications apparatus 210 may include two microphones to allow the processor 214 to perform echo cancellation on the audio signals received from the microphones. The speaker 224 may comprise a surface speaker that allows, for example, the metal of the elevator car operating panel to be the sound transmitting surface. This is beneficial for retrofit installations of the communications apparatus 210, which may use magnet mounting to avoid extra cutouts in exiting in elevator car surfaces In other embodiments, the speaker 224 may comprise an audio induction loop for hear impaired passengers.

The controller 212 of the communications apparatus 210 includes a processor 214 and an associated memory 216 comprising computer-executable instructions that, when executed by the processor 214, cause the processor 214 to perform various operations, such as, for example, to implement the codec 227 (encoder/decoder). The processor 214 may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory 216 may be a storage device, such as, for example, a random access memory (RAM), read only memory (ROM), or other electronic, optical, magnetic or any other computer readable medium.

The power source 222 of the communications apparatus 210 is configured to store and supply electrical power to the communications apparatus 210. The power source 222 may include an energy storage system, such as, for example, a battery system, capacitor, or other energy storage system known to one of skill in the art. The power source 222 may also generate electrical power for the microphone 218 and/or speaker 224. The power source 222 may also include an energy generation or electricity harvesting system, such as, for example synchronous generator, induction generator, or other type of electrical generator known to one of skill in the art. The power source 222 may also be a wired connection to a permanent source.

The communications apparatus 210 includes a communication module 220 configured to allow the controller 212 to communicate with the remote system 280 through the local gateway device 240. The communication module 220 may be configured to communicate with the local gateway device 240 using wireless protocols, such as, for example, Bluetooth, Wi-Fi, HaLow (801.11ah), Wireless M-Bus Zigbee, zWave or other short-range wireless protocol known to one of skill in the art. The local gateway device 240 is configured to send/receive data with the remote system 280 through the communications network 250, as described above.

In operation, when a passenger needs to make a call from the elevator car 103, the passenger may access an operating panel of the elevator car 103 to initiate a call (e.g., an emergency call button). The emergency call button may generate power to operate the communications apparatus 210 (e.g., through a battery, wireless energy harvest, piezoeletrics, etc.). The audio from the microphone 218 is encoded at the communications apparatus 210 using the codec 227. The encoded audio data is then sent from the communications apparatus 210 to the local gateway device 240 using a wireless communications protocol. As the audio data is encoded, the data rate needed is relatively low. In an example embodiment, the required data rate ranges from about 0.5 kbps to about 10 kbps.

From the local gateway device 240, the encoded audio data is transmitted to the remote system 280 over the communications network 250. Once at the remote system 280, codec 282 is used to decode the encoded audio data and produce hearable audio from the passenger at the remote system 280. An operator at the remote system 280 can then generate and send audio data back to the passenger in the elevator car 103 using the same process, in reverse direction. In this manner, a passenger in the elevator car 103 and an operator at the remote system 280 may have a conversation. The remote system 280 may be an emergency call center. In other embodiments, the remote system 280 may be non-emergency entity, such as building maintenance or housekeeping for the building in which the elevator is located.

The range of local gateway device 240 in the hoistway 117 allows easy installation without wires between the elevator car 103 and the top of the hoistway 117. The low power consumption of the communications apparatus 210 allows a battery to be used for the power source 222, enabling plug-in-play installation. The communications apparatus 210 may be simply installed in the elevator car 103 (e.g., with magnets, adhesive, etc.) to allow rapid and simple installation. The use of a low data rate results in very low overall system and running cost.

In other embodiments, additional data from the elevator car 103 may be transferred along with the encoded audio data 203. For example, sensor data from one or more sensors attached to the elevator car 103 may be combined with the encoded audio data. The sensor data may be encrypted and compressed and then combined with the encoded audio data 203.

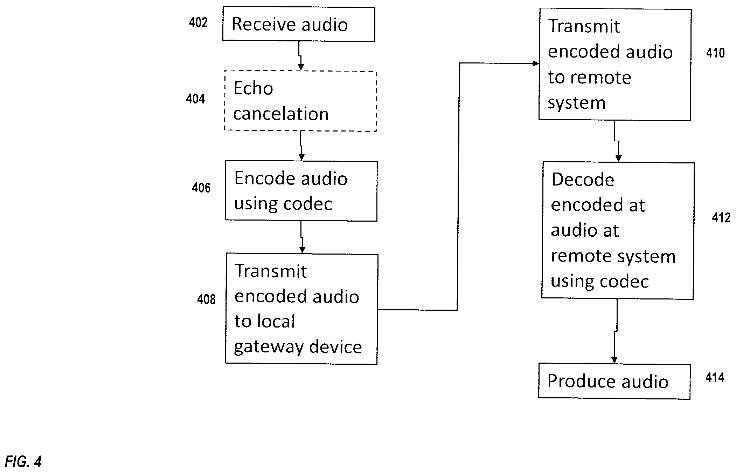

FIG. 4 depicts a process of transmitting audio from an elevator car 103 to the remote system 280. At 402, audio from a passenger in elevator car 103 is received at controller 212 via microphone 218. At 404, if more than one microphone is used, the controller may perform an optional echo cancelation routine. At 406, the audio is encoded using codec 227. At 408, the encoded audio data is sent form the communications apparatus 210 to the local gateway device 240. At 410, the local gateway device 240 sends the encoded audio data to the remote system 280 over the communications network 250. At 412, the encoded audio data is decoded at the remote system using codec 282 and the audio is produced at 414. The process would operate in reverse when sending audio from the remote system 280 to the elevator car 103.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

As described above, embodiments can be in the form of processor-implemented processes and devices for practicing those processes, such as a processor 214 in communications apparatus 210. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. An elevator system comprising:
a hoistway;
an elevator car configured to travel in the hoistway;
a local gateway device configured to communicate with a remote system over a communications network;
a communications apparatus installed at the elevator car, the communications apparatus including a codec configured to encode audio data from the elevator car prior to transmission to the local gateway device.

2. The elevator system of claim 1 wherein the codec is configured to decode audio data received from the local gateway device.

3. The elevator system of claim 1 or 2, wherein the communications apparatus comprises and speaker and a microphone.

4. The elevator system of claim 3, wherein the communications apparatus comprises a plurality of microphones.

5. The elevator system of claim 4, wherein the communications apparatus performs echo cancelation on audio received from the plurality of microphones.

6. The elevator system of any of claims 1 to 5, wherein the communications apparatus comprises a communications module configured to send and receive encoded audio data to and from the local gateway device.

7. The elevator system of claim 6, wherein the communications module sends or receives the encoded audio data at a rate of about 0.5 kbps to about 10 kbps.

8. A communications apparatus for an elevator system, the communications apparatus comprising:
a microphone;
a speaker;
a processor coupled to the microphone and speaker;
a codec configured to (i) encode audio data received from the microphone for transmission to a local gateway device and (ii) decode encoded audio data received from the local gateway device for transmission to the speaker;
a communications module configured to send encoded audio data to the local gateway device and receive encoded audio data from the local gateway device.

9. The communications apparatus claim 8 wherein the communications module transmits and receives encoded audio data at a rate of about 0.5 kbps to about 10 kbps.

10. The communications apparatus of claim 8 or 9, wherein the microphone comprises a plurality of microphones.

11. The communications apparatus of claim 10, wherein the processor performs echo cancelation on audio received from the plurality of microphones.

12. The communications apparatus of any of claims 8 to 11, further comprising a battery to power the communications apparatus.

13. A communications system comprising:
a hoistway;
an elevator car configured to travel in the hoistway;
a local gateway device configured to communicate with a remote system over a communications network;
a communications apparatus installed at the elevator car, the communications apparatus including a codec configured to encode audio data from the elevator car prior to transmission to the local gateway device;
a remote system;
a communications network configured to communicate encoded audio data from the local gateway device to the remote system and to communicate encoded audio data from the remote system to the local gateway device.

14. The communications system of claim 13 wherein the remote system is an emergency call center.

15. A method of communicating between an elevator car and a remote system, the method comprising:
receiving audio from a passenger at a communications apparatus in the elevator car;
encoding the audio using a codec to produce encoded audio data;
transmitting the encoded audio data to a local gateway device;
transmitting the encoded audio data from the local gateway device to the remote system over a communications network;
decoding the encoded audio data at the remote system using a codec; and
producing the audio at the remote system.
